# EUROPEAN PATENT SPECIFICATION

(11) **EP 4 052 924 B1**
(45) Date of publication and mention of the grant of the patent: **04.10.2023**
(21) Application number: 21160494.7
(22) Date of filing: 03.03.2021
(51) Int. Cl.: B60B 29/00, B25B 27/02, B60B 30/08

(54) **WHEEL REMOVAL TOOL**
RADDEMONTAGEWERKZEUG
OUTIL DE RETRAIT DE ROUE

(43) Date of publication of application: 07.09.2022
(73) Proprietor: Wallmek i Kungälv AB, 442 40 Kungälv (SE)
(72) Inventor: HASSELSKOG, Martin, 442 71 Kärna (SE); JOHANSSON, Sten, 442 75 Lycke (SE); WALLMAN, Niklas, 442 30 Kungälv (SE)
(74) Representative: Zacco Sweden AB

(56) References cited:
- US-A- 5 323 524
- US-A1- 2021 031 344
- US-B1- 9 969 214

## Description

### TECHNICAL FIELD

The present invention relates to a tool for removing a wheel from a wheel hub of a motor vehicle, such as e.g. cars, trucks, busses and construction vehicles.

### BACKGROUND

During repair and maintenance of various motor vehicles, such as trucks, it is often necessary to remove the wheels of the vehicle. Maintenance work that require the removal of the wheels may for example be tire rotations, brake repair/replacement, etc. However, the removal of the wheels can be extremely tedious work, this is mainly due to the small tolerances between the wheel and the hub it is mounted to together with corrosion and debris that further wedge the wheel to the hub during normal use. Heavy trucks and their associated trailers are particularly exposed to this problem of "seized wheels" as the wheels are less frequently removed (in terms of miles per wheel removal) as compared to conventional cars, even though seized wheels may be a problem for any type of motor vehicle having wheels mounted to a wheel hub.

Typically, in order to remove wheels, one would remove the lug nuts securing the wheel to the hub and then manually pull the wheel off the hub. If the wheel were to be stuck or seized to the hub, a conventional method to dislodge or loosen the wheel from the hub is to hit the wheel with a sledgehammer until it comes loose. However, this method of removing seized wheels is not only problematic due to the labour intensive and time consuming nature of the process, but also due to the fact that there is a non-negligible risk of damaging the wheel, damaging the hub, damaging other parts of the truck, or even injuring oneself.

To this end, some wheel removal tools have been proposed, which can be used to remove wheels from wheel hubs (see for instance document US9969214 B1). Another example of such a tool is disclosed in US Patent No. 6, 012, 211 A, which is configured to remove wheels by pushing against the mounting studs of a motor vehicle wheel assembly.

However, there is still a need for improvements in the art, and in particular for wheel removal tools which are user-friendly, robust and capable of removing seized wheels off a motor vehicle with reduced risk of damaging any parts of the motor vehicle and with reduced risk of injuring the operator of the tool.

### SUMMARY

It is therefore an object of the present disclosure to provide a tool for removing a wheel from a wheel hub, which alleviates all or at least some of the above-discussed drawbacks of presently known solutions.

This and other objects are achieved by means of a tool for removing a wheel from a wheel hub as defined in the appended claims. The term exemplary is in the present context to be understood as serving as an instance, example or illustration.

According to a first aspect there is provided a tool for removing a wheel from a wheel hub. The tool comprises a puller beam having an elongated shape extending in a direction parallel to a first axis. The puller beam is a hollow beam having a top surface and a bottom surface. The puller beam has a first pair of openings and a second pair of openings, where each pair of openings has a first opening arranged on the top surface and a second opening arranged on the bottom surface. Moreover, each pair of openings is aligned so to form a pair of passages through the beam. The passages extend in a direction parallel to a second axis that is perpendicular to the first axis. Furthermore, the tool comprises a pair of pivoting members arranged within the puller beam. Each pivoting member is arranged between a corresponding pair of openings, where each pivoting member is pivotable about an axis parallel with a third axis that is orthogonal to the first axis and to the second axis. Further, each pivoting member has a threaded through hole. The tool further has a base member having at least one receiving portion for receiving a wheel stud of the wheel hub, and a pair of threaded members. Each threaded member is arranged to extend through a corresponding passage of the puller beam and through the threaded through hole of a corresponding pivoting member. Moreover, each threaded member has a proximal end protruding from the top surface of the puller beam and a distal end protruding from the bottom surface of the puller beam. The distal ends of the pair of threaded members are arranged to abut against the base member so to move the puller beam away from the base member when a rotational force is applied to the pair of threaded members. The tool further comprises at least two connection members for securing the puller beam to the wheel and for exerting a pulling force on the wheel when the rotational force is applied to the pair of threaded members.

In accordance with some embodiments, an underside of the base member is arranged to abut against the wheel hub so to push against the wheel hub when the rotational force is applied to the pair of threaded members. However, in other embodiments, the underside of the base member is arranged to abut against a plurality of wheel studs of the wheel hub so to push against the wheel hub when the rotational force is applied to the pair of threaded members.

The herein proposed tool is particularly suitable for removing seized or stuck wheels from a wheel hub of a motor vehicle. Moreover, the tool is compatible with a large variety of wheel sizes and configurations and do not require symmetrical apertures in the wheel to be able to effectively remove the wheel from the wheel hub. Moreover, the tool can be operated without requiring that the pulling bar in "perfect" alignment with the wheel/wheel-hub (perpendicular to the wheel axis) as the tool can still be attached to the wheel and exert a pulling force in a safe and reliable manner even while the pulling bar is "tilted".

Moreover, the proposed tool is versatile in that it is compatible with a large variety of wheel dimensions and hub dimensions. One may however need to have a set of different "base members", some having different dimensions/diameters in a tool kit in order to be able to work the tool with a variety of wheel types and a wide range of wheel/hub dimensions. Further, by having two different types of base members (one pushing against the wheel hub, and another pushing against the wheel studs of the wheel hub) the operator is given a variety of options so to be able to select a "best configuration" for each situation.

Further embodiments of the invention are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present invention will in the following be further clarified with reference to the embodiments described hereinafter.

### BRIEF DESCRIPTION OF THE DRAWINGS

Further objects, features and advantages of embodiments of the invention will appear from the following detailed description, reference being made to the accompanying drawings, in which:
Fig. 1 is an exploded perspective view of a tool for removing a wheel from a wheel hub in accordance with an embodiment of the present invention.
Fig. 2 is an exploded perspective view of a tool for removing a wheel from a wheel hub in accordance with an embodiment of the present invention.
Fig. 3 is an exploded perspective view of a tool for removing a wheel from a wheel hub in accordance with an embodiment of the present invention.
Fig. 4 is a perspective view of a tool for removing a wheel from a wheel hub prior to the mounting of the tool to the wheel in accordance with an embodiment of the present invention.
Fig. 5 is a perspective view of the tool in Fig. 4 when it has been mounted to the wheel in accordance with an embodiment of the present invention.
Fig. 6 is a perspective view of a tool for removing a wheel from a wheel hub prior to the mounting of the tool to the wheel in accordance with an embodiment of the present invention.
Fig. 7 is a perspective view of the tool in Fig. 6 when it has been mounted to the wheel in accordance with an embodiment of the present invention.

### DETAILED DESCRIPTION

In the following detailed description, some embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention. In the following description of exemplary embodiments, the same reference numerals denote the same or similar components.

The tool as disclosed herein, along with its components, is preferably made from a rigid material such as any suitable metal or metal alloy (e.g. cast iron, steel, etc.). It may however be made from other materials depending on specific applications and specification as will be obvious for one skilled in the art. The method for manufacturing such a tool using a metallic material is considered to be well known in the art and for the sake of brevity and conciseness omitted in the following.

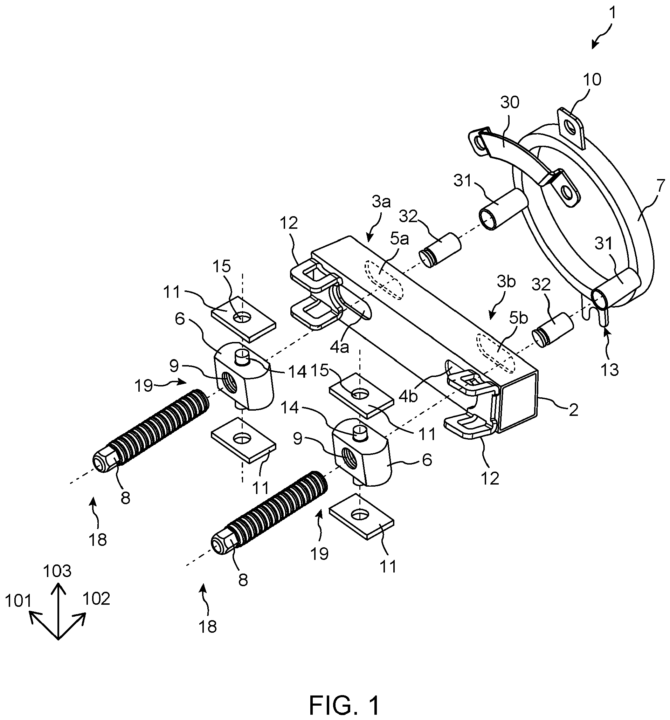

Fig. 1 is an exploded perspective view of a tool 1 for removing a wheel from a wheel hub in accordance with an embodiment of the present invention. The tool 1 comprises a puller beam 2 having an elongated shape extending in a direction parallel to a first axis 101. The puller beam 2 is a hollow beam having a rectangular cross section when the cut is taken through the puller beam 2 at a right angle to the first axis. The puller beam 2 further has a top surface and a bottom surface.

Moreover, the puller beam 2 has a first pair of openings (4a, 5a) and a second pair of openings (4b, 5b). Each pair of openings has a first opening 4a, 4b, arranged on the top surface of the puller beam 2, and a second opening 5a, 5b arranged on the bottom surface of the puller beam 2. Moreover, each pair of openings is arranged so to form a pair of passages 3a, 3b through the beam, the passages extending through the puller beam 2 in a direction parallel to a second axis 102 that is perpendicular to the first axis 101. In the illustrated embodiment, the openings 4a, 4b, 5a, 5b of each pair of openings are elongated openings having a main extension in a direction parallel to the first axis 101. "Having a main extension in a direction" is in the present context to be construed as that the elongation is along that direction.

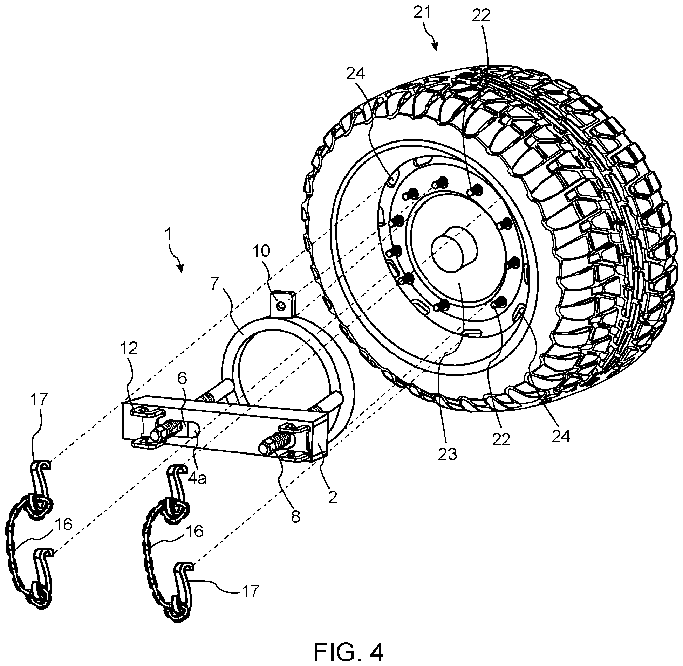

Further, the tool 1 has a pair of pivoting members 6 arranged within the puller beam 2 (as the illustration is an exploded view the pivoting members 6 are shown outside of the puller beam 2). Each pivoting member 6 is arranged between a corresponding pair of openings (see e.g. Fig. 4). There, each pivoting member 6 is arranged so to be pivotable about an axis parallel with a third axis 103 that is orthogonal to the first axis 101 and to the second axis 102. The pivoting movement may be enabled by means of a pair of cylindrical protrusions 14 extending from each lateral side surface of the pivoting members 6. The protruding portions 14 protrude in a direction parallel to the third axis 103, when the tool 1 is in an assembled state. The puller beam 2 may accordingly be provided with a corresponding recess or indentation on an inner lateral surface thereof (not shown) for receiving the protruding portions 14. Alternatively, or additionally the pivoting members 6 may be provided with appropriately rounded edges so to allow the pivoting members 6 to pivot within the puller beam 2. However, by using the protruding portions, the position of the pivoting members 6 is more stable within the puller beam thereby facilitating the assembly of the tool and subsequent use.

Each pivoting members 6 further has a threaded through hole 9. The extension axis of each through hole 9 is substantially parallel with the extension axis of the passage 3a, 3b when the tool 1 is in an assembled state.

The tool 1 further comprises two pairs of bricks 11 arranged within the puller beam 2. Each brick is provided with a hole 15 for receiving a protruding portion 14 of the pivoting members 6. Thus, when the tool 1 is in an assembled state, the a brick 11 is arranged on each side of the pivoting members 6 such that the protruding portions 14 extend at least partly into a corresponding hole 15 of the bricks. The bricks 11 provide the additional technical advantage of making the tool more robust and durable by distributing at least some the pulling/pressing forces from the pivoting members 6 to a larger surface along the inner corners of the puller beam 2.

The tool 1 further has a base member 7 with at least one receiving portion 10, 13 for receiving a wheel stud of the wheel hub. The receiving portions 10, 13 mainly serve to provide stability while the operator of the tool 1 is to mount the tool 1 onto the wheel/wheel-hub assembly. Furthermore, the tool 1 comprises a pair of threaded members 8, each threaded member is arranged through a corresponding passage 3a, 3b of the puller beam 2 and also through a threaded through hole 9 of a corresponding pivoting member 6. Each threaded member 8 has a proximal end 18 protruding from the top surface of the puller beam 2 and a distal end 19 protruding from the bottom surface of the puller beam 2 (when the tool is in an assembled state as e.g. illustrated in Fig. 4). The threaded members 8 may for example be in the form of bolts.

The distal ends 19 of the pair of threaded members are arranged to abut against the base member 7 so to move/push the puller beam 2 away from the base member 7 when a rotational force is applied to the pair of threaded members 8. Furthermore, the base member 7 has at least one optional supporting member 31 (two in the illustrated example embodiment) arranged on an upper surface of the base member 7. The upper surface of the base member 7 is to be understood as the surface of the base member 7 that faces the puller beam 2 when the tool is in use. The optional supporting members 31 are provided with an enclosure for receiving the distal ends 19 of the threaded members 8 and for accommodating and supporting the distal end portions of the threaded members 8 when the tool 1 is in use.

The threaded members 8 may further comprise an insert 32 to be received in a recess of a main body portion of the threaded member 8. More specifically, this recess may be in the form of a blind hole at the distal end 19 of the main body portion of the threaded member 8. Thereby, in some embodiments, the inserts 32 form the "distal end" of the threaded member 8. The inserts 32 are configured to better distribute the pressing forces when the tool 1 is in use, and may comprise a washer (e.g. spring washer, not shown) to be inserted into the recesses of the main body portion of the threaded member 8 prior to the insertion of inserts 32.

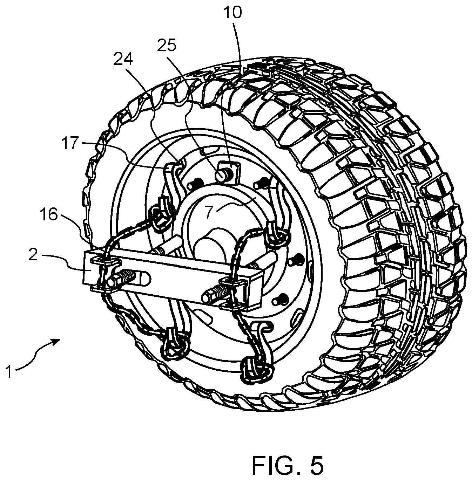

The tool 1 further comprises at least two connection members (see e.g. reference numerals 16 and 17 in Figs. 4 and 5) for securing the puller beam to the wheel and exerting pulling force on the wheel when the rotational force is applied to the pair of threaded members. Further details regarding the connection members will be provided in reference to Figs. 4 - 7 below.

Moving on, the puller beam 2 is further provided with a pair of holding members 12 arranged on the top surface of the puller beam 2. In more detail, the pair of holding members 12 are preferably arranged on opposite end portions of the upper surface of the puller beam 2, such that each of the holding members 12 is located on a corresponding end portion of the upper surface. The holding members 12 may for example welded, or otherwise fixed, to the top surface of the puller beam 2. In some embodiments, each holding members is provided with a bottom portion having a bottom surface facing the top surface of the puller beam 2. Furthermore, each holding member has at least one wall portion extending perpendicularly away from the top surface of the puller beam 2. Each wall has a through hole.

In some embodiments, the connection members are arranged to extend through the through holes of the holding members 12 such that the connection members extend over the top surface of the puller beam 2. The holding members 12 facilitate the mounting of the tool onto the wheel/wheel hub assembly by keeping the connection members in place during the mounting process. Moreover, by providing openings or through holes in the holding members, through which the connection members are arranged to extend, the tool 1 is made safer in case one of the connection members should detach from the wheel during use. However, in other embodiments, the puller beam 2 may be provided with indentations (not shown) on the top surface or some other suitable structure for at least partly holding the connection members in place.

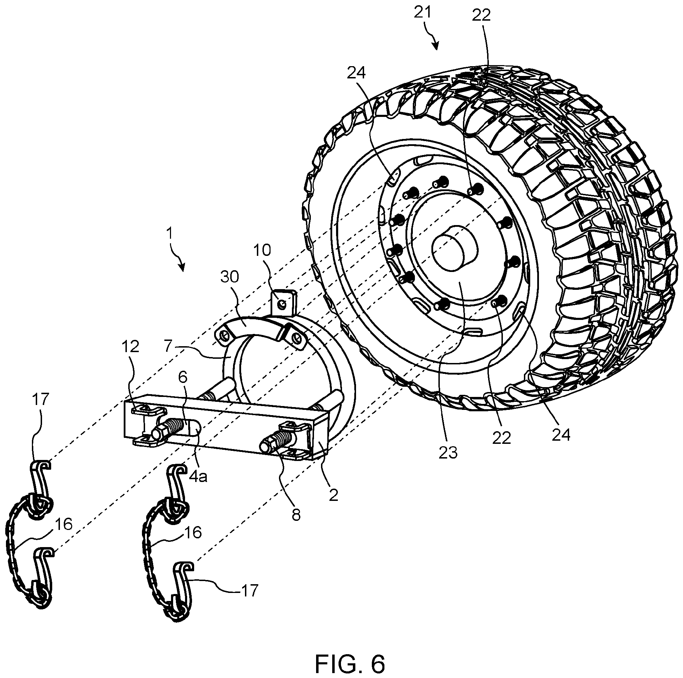

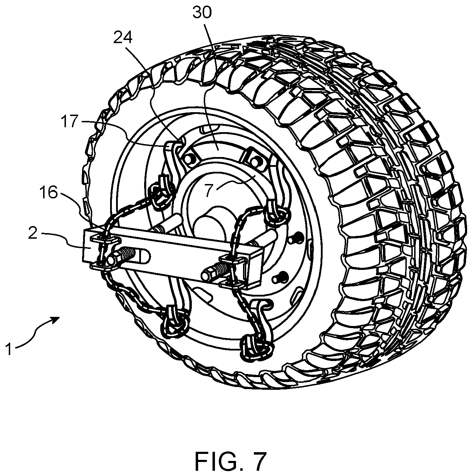

Furthermore, in some embodiments, the tool 1 further comprises a bracket 30 for securing the base member 7 against the wheel/hub assembly when the tool is to be mounted onto the wheel/wheel-hub assembly. The bracket 30 has an arcuate shape whose inner radius substantially corresponds to the outer radius of the base member 7. In more detail, the bracket 30 has a centre portion in-between two end portions, where each end portion has a through hole. The centre portion is raised/elevated relative to the end portions when the bracket is arranged on a horizontal surface such that a centre axis of the through holes are parallel to the normal of the horizontal surface. The bracket 30 is particularly advantageous in situations where the wheel studs of the wheel hub are too short to be able to be secured (by means of a nut) at the receiving portion(s) 10, 13 of the base member. The bracket 30 is then arranged with the centre portion over a receiving portion 10, 13 of the base member, such that the end portions can accommodate the shorter wheel studs in the corresponding through holes so that the bracket can be secured to the wheel hub. This process of using the bracket 30 to secure the tool 1 is further described in reference to Figs. 6 and 7.

Further, an underside of the base member 7 is arranged to abut against the wheel hub so to push against the wheel hub when the rotational force is applied to the pair of threaded members. By pushing against the wheel hub instead of the exposed wheel studs the risk of damaging the studs (e.g. due to bending or damaging the threading of the studs) is reduced. This is particularly advantageous for removing larger seized wheels (e.g. of large trucks/semitrailers) as the forces required to loosen the wheel are relatively high and the risk of damaging any components during the removal procedure is always present. Thus, it may be advantageous to have a tool that is capable of applying an evenly distributed force on the wheel hub instead of the exposed wheel studs 22.

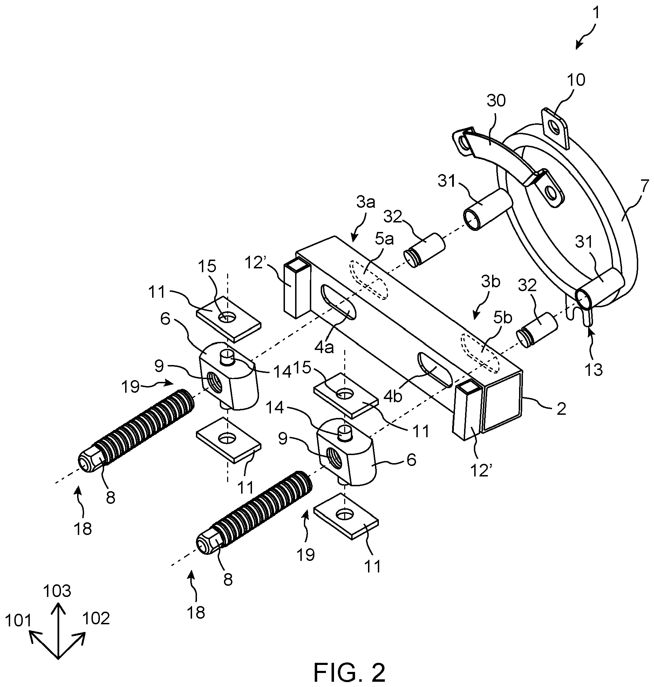

Moving on, Fig. 2 is an exploded perspective view illustration of a tool 1 for removing a wheel from a wheel hub in accordance with another embodiment of the present invention. The difference between the tool 1 illustrated in Fig. 2 as compared to the tool illustrated in Fig. 1 is in the structure of the holding members 12'. Here, the holding members 12' are in the form of hollow rectangular cylinders or cuboids, each having a through hole for accommodating and securing the connection members. The holding members 12' may for example be welded, or otherwise adhered, to the top surface of the puller beam 2. The other details of the tool 1 are considered to have been described in sufficient detail in reference to Fig. 1 above, and will for the sake of brevity and conciseness not be repeated in reference to Fig. 2.

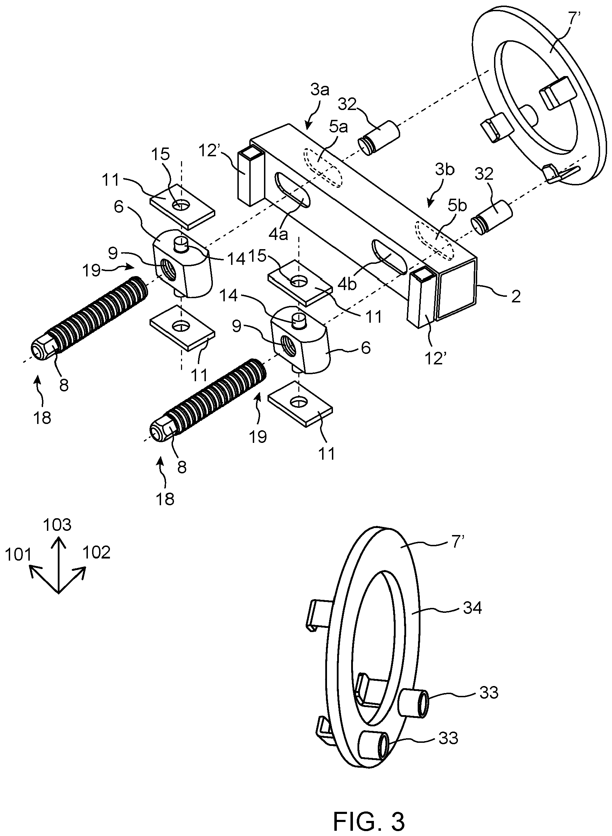

Fig. 3 is an exploded perspective view illustration of a tool 1 for removing a wheel from a wheel hub in accordance with yet another embodiment of the present invention. The difference between the tool 1 illustrated in Fig. 3 as compared to the tool illustrated in Fig. 2 is in the structure of the base member 7'. In contrast to the base members 7 illustrated in Figs. 1 and 2, an underside 34 of the base member 7' illustrated in Fig. 3 is arranged to abut against a plurality of wheel studs of the wheel hub so to push against the wheel hub when the rotational force is applied to the pair of threaded members. The embodiment of the present invention illustrated in Fig. 3 is particularly suitable for smaller wheels where there is insufficient space between the wheel and the hub to be able to properly push against the wheel hub.

Moreover, in some embodiments, the base member 7' is provided with a set of holding members (angled parts) on an upper surface thereof (i.e. the surface facing the puller beam 2). Here, the tool 1 may be provided with two base members 7, 7', where the base members 7 as illustrated in Figs. 1 and 2 may be accommodated within these holding members. Thereby, the distal ends 19 of the threaded members are arranged to abut against first base member 7, which in turn presses against the second base member 7'. Accordingly, the above-described supporting members 31 for receiving the distal ends 19 of the threaded members 8 can be used for accommodating and supporting the distal end portions 19 of the threaded members 8 when the tool 1 is in use. However, the same (optional) supporting members (see e.g. ref. 31 in Fig. 2) may be provided in the upper surface of the base member 7' illustrated in Fig. 3, thereby omitting the need for using two base members 7, 7' if desired.

Figs. 4 and 5 are isometric views of a tool 1 tool for removing a wheel 21 from a wheel hub 22 in accordance with an embodiment of the present invention. The depicted tool 1 corresponds to the tool 1 illustrated in Fig. 1 with connection members 16, here in the form of two chains 16. Each chain 16 is provided with a securing member 17 on both ends thereof. Each securing member 17 may be in the form of an S-hook, where one of the ends has a smaller hook (with a tighter bend and smaller gap) as compared to the other end, which has a bigger hook (with a wider bend and bigger gap). Figs. 4 and 5 serve to exemplify how the wheel removal process may be performed by means of the wheel removal tool 1 as presented herein, and in particular how the tool 1 may be mounted onto the wheel/hub assembly 21, 22.

The use of S-hooks facilitates the mounting process of the tool 1 onto the wheel/hub assembly as the effective length of the chain can easily be adjusted by moving the S-hooks at different positions in the chain. Moreover, it is advantageous to have a "hook-shaped" portion engaging the cavities/openings 24 in the wheel to account for varying shapes and sizes of the cavities/openings depending on the type of wheel 21.

In use, the base member 7 is mounted so to have its bottom surface abutting against the wheel hub 23. Thus, the bottom surface of the base member 7 is accommodated within the inner radius of the wheel 21 to be removed. Preferably, the receiving portion 10 is used to stabilize the base member during the mounting process by allowing one of the wheel studs 22 to be accommodated in the through hole of the receiving portion 10. The base member 7 may subsequently to be secured by fixing a nut 25 onto the portion of the stud 22 that protrudes from the receiving portion 10.

Once the base member 7 is mounted onto the wheel/hub assembly, the puller beam 2 with the threaded members 8 and connection members 16 are secured to the base member 7 and to the wheel 21. More specifically, the tool 1 is secured to the wheel 21 by means of the securing members 17, which are inserted and hooked into a corresponding cavity or opening 24 of the wheel such that the chains 16 exert a pulling force on the wheel 21 when a rotational force is applied to the threaded members 8. In more detail, by rotating the threaded members 8, the puller bar 2 will be forced away from the base member which in turn tightens the chains 16 and subsequently the wheel will be pulled off the hub. The threaded members may for example be alternatingly rotated by means of an impact wrench (i.e. slightly rotating each threaded member 8 in an alternating fashion so to "wiggle" the wheel 22 off the hub 23) or any other suitable power tool.

Fig. 5 also illustrates how the chains 16 extend over the top surface of the puller beam 2, and how the chains 16 are threaded through the through holes provided in the holding members 12 of the puller beam 2. As readily understood by the skilled artisan, once a rotational force is applied to the pair of threaded members 8, the chains 16 will be tightened and subjected to a large pulling force. Thus, should one of the securing members 17 disengage from the wheel 21 or from the chain, the securing members 12 serve to mitigate the risk of one of the chains of shooting off the wheel/hub assembly and potentially injuring the mechanic or anyone else nearby.

Moreover, in some embodiments, the tool 1 may comprise four connection members, e.g. in the form of four chains 16. In such embodiments, the puller beam 2 may comprise a plurality of suitably arranged loops onto which the chains may be attached. However, an advantage of having two connection members 16 that extend over a top surface of the puller beam 2 is that the end portions of the chains and in particular the securing members 17 may be attached to the wheel at asymmetrical points relative to the wheel hub. In such scenarios, the connection members (e.g. chains) 16 will self-align once a rotational force is applied to the threaded members 8 and the connection members are "stretched".

The elongated openings 4a, 4b, 5a, 5b allows the threaded members 8 to be translatable along the first axis 101 so to be compatible with base members 7, 7' of varying dimensions, rendering the tool 1 more universal as compared to prior known solutions. Moreover, the pivoting members 6 allow the threaded members 8 to be tilted relative to the puller beam 2 while the tool 1 is mounted to the wheel/hub assembly and still be able to apply a pushing force onto the base member 7, 7' that is perpendicular relative to the top surface of the base member. Thus, the pivoting members 6 allows the tool to be used to situations where it might not be possible to keep perfect alignment due to insufficient space around the operating area with reduced risk of injury to the operator due to "imperfect alignment" of various components of the tool when large forces are applied.

It should be noted that the purpose of the tool is not necessarily to completely remove/pull the wheel 21 of the hub 2, but to loosen the wheel 21 such that it can easily be lifted off by an operator/mechanic.

Further, Figs. 6 and 7 are isometric views of a tool 1 tool for removing a wheel 21 from a wheel hub 22 in accordance with an embodiment of the present invention. In contrast to the embodiment illustrated in Figs. 4 and 5, the tool 1 illustrated in Figs. 6 and 7 further comprise a bracket 30 for securing the base member 7 against the wheel/hub assembly. Here, the wheel studs 22 of the hub that are protruding from the wheel 21 are not sufficiently long to be effectively secured by means of the receiving portion 10. Thus, for these situations with "short studs", the bracket 30 can be used to engage a pair of studs 22 (see Fig. 7) in order to stabilize the base member 7, and in extension, the entire tool 1 during use.

The invention has mainly been described above with reference to specific exemplifying embodiments, many different alterations, modifications and the like will become apparent for those skilled in the art. For example, in some embodiments the tool 1 is provided without the optional pivoting members 6. Instead, the tool 1 may comprise a pair of guiding bodies (not shown), each comprising a threaded through hole that is arranged within the puller beam. These guiding bodies with the threaded through holes may be arranged in the same position as the pivoting members (i.e. between a corresponding pair of elongated openings). The pair of threaded members may accordingly be configured to extend through a corresponding passage of the puller beam and through the threaded through hole of a corresponding guiding body. Moreover, in some embodiments, the beam is not a hollow beam (not shown), but may instead comprise passages in the form of threaded through hole (not shown). In other words, the puller beam may be provided without elongated openings and without any pivoting/guiding bodies (not shown). However, in such embodiments, the puller beam 2 is provided with a pair of holding members arranged on the top surface of the puller beam, each holding member comprising a through hole; and wherein each connection member is arranged to extend through a corresponding through hole of the pair of holding members.

The word "comprising" does not exclude the presence of other elements or steps than those listed in the claim. The word "a" or "an" preceding an element does not exclude the presence of a plurality of such elements.

## Claims

1. A tool (1) for removing a wheel from a wheel hub, the tool comprising:
a puller beam (2) having an elongated shape extending in a direction parallel with a first axis (101), wherein the puller beam is a hollow beam having a top surface and a bottom surface;
wherein the puller beam has a first pair of openings and a second pair of openings, each pair of openings having a first opening (4a, 4b) arranged on the top surface and a second opening arranged on the bottom surface (5a, 5b), each pair of openings being aligned so to form a pair of passages (3a, 3b) through the beam, the passages extending in a direction parallel with a second axis (102) that is perpendicular to the first axis;
a pair of pivoting members (6) arranged within the puller beam, each pivoting member being arranged between a corresponding pair of openings, wherein each pivoting member is pivotable about an axis parallel with a third axis (103) that is orthogonal to the first axis and to the second axis, wherein each pivoting member has a threaded through hole (9);
a base member (7, 7') having at least one receiving portion (10, 13, 33) for receiving a wheel stud of the wheel hub;
a pair of threaded members (8), each threaded member being arranged to extend through a corresponding passage of the puller beam (2) and through the threaded through hole (9) of a corresponding pivoting member (6), wherein each threaded member has a proximal end protruding from the top surface of the puller beam and a distal end protruding from the bottom surface of the puller beam;
wherein the distal ends of the pair of threaded members (8) are arranged to abut against the base member (7, 7') so to move the puller beam away from the base member when a rotational force is applied to the pair of threaded members;
at least two connection members (16) for securing the puller beam to the wheel and exerting a pulling force on the wheel when the rotational force is applied to the pair of threaded members.

2. The tool (1) according to claim 1, wherein an underside of the base member (7, 7') is arranged to abut against the wheel hub so to push against the wheel hub when the rotational force is applied to the pair of threaded members.

3. The tool (1) according to claim 2, wherein the at least one receiving portion (10, 13) is arranged on at least one flange portion of the base member, the flange portion protruding from a side surface of the base member.

4. The tool (1) according to claim 1, wherein an underside of the base member (7, 7') is arranged to abut against a plurality of wheel studs of the wheel hub so to push against the wheel hub when the rotational force is applied to the pair of threaded members (8).

5. The tool (1) according to claim 4, wherein the at least one receiving portion (33) arranged in a cylindrical body on the underside of the base member.

6. The tool (1) according to any one of claims 1 - 5, wherein each opening (4a, 4b, 5a, 5b) of the first and second pairs of openings in the puller beam are elongated openings having a main extension in a direction parallel to the first axis (101).

7. The tool (1) according to any one of claims 1 - 6, wherein each of the at least two connection members (16) comprise a chain, each chain being provided with a securing member (17) on both ends thereof; and
wherein each chain is arranged to extend over the top surface of the puller beam (2) and the securing members are arranged to engage a set of cavities of the wheel so to secure the chains to the wheel and exert a pulling force on the wheel when the rotational force is applied to the pair of threaded members (8).

8. The tool (1) according to claim 7, wherein the puller beam (2) has a pair of holding members (12, 12') arranged on the top surface of the puller beam, each holding member comprising a through hole; and
wherein each chain (16) is arranged to extend through a corresponding through hole of the pair of holding members.

9. The tool (1) according to any one of claims 1-8, further comprising two pairs of bricks (11) arranged within the puller beam, each brick having a hole (15) for receiving a protruding portion (14) of the pivoting members.

## Patentansprüche

1. Werkzeug (1) zum Demontieren eines Rades von einer Radnabe, wobei das Werkzeug Folgendes umfasst:
einen Zugbalken (2), der eine längliche Form aufweist und sich in einer Richtung, die parallel zu einer ersten Achse (101) verläuft, erstreckt, wobei der Zugbalken ein hohler Balken ist, der eine obere Fläche und eine untere Fläche aufweist;
wobei der Zugbalken ein erstes Paar Öffnungen und ein zweites Paar Öffnungen aufweist, wobei jedes Paar Öffnungen eine erste Öffnung (4a, 4b), die auf der oberen Fläche angeordnet ist, und eine zweite Öffnung, die auf der unteren Fläche (5a, 5b) angeordnet ist, aufweist, wobei jedes Paar Öffnungen so ausgerichtet ist, dass es ein Paar Durchgänge (3a, 3b) durch den Balken ausbildet, wobei sich die Durchgänge in einer Richtung, die parallel zu einer zweiten Achse (102) verläuft, erstrecken, die senkrecht zu der ersten Achse verläuft;
ein Paar Schwenkelemente (6), das innerhalb des Zugbalkens angeordnet ist, wobei jedes Schwenkelement zwischen einem entsprechenden Paar Öffnungen angeordnet ist, wobei jedes Schwenkelement um eine Achse schwenkbar ist, die parallel zu einer dritten Achse (103) verläuft, die orthogonal zu der ersten Achse und zu der zweiten Achse verläuft, wobei jedes Schwenkelement ein Gewindedurchgangsloch (9) aufweist;
ein Basiselement (7, 7'), das mindestens einen Aufnahmeabschnitt (10, 13, 33) zum Aufnehmen eines Radbolzens der Radnabe aufweist;
ein Paar Gewindeelemente (8), wobei jedes Gewindeelement dazu angeordnet ist, sich durch einen entsprechenden Durchgang des Zugbalkens (2) und durch das Gewindedurchgangsloch (9) eines entsprechenden Schwenkelements (6) zu erstrecken, wobei jedes Gewindeelement ein proximales Ende, das von der oberen Fläche des Zugbalkens hervorsteht, und ein distales Ende, das von der unteren Fläche des Zugbalkens hervorsteht, aufweist;
wobei die distalen Enden des Paars Gewindeelemente (8) dazu angeordnet sind, an dem Basiselement (7, 7') anzuliegen, um den Zugbalken von dem Basiselement weg zu bewegen, wenn eine Drehkraft auf das Paar von Gewindeelementen aufgebracht wird;
mindestens zwei Verbindungselemente (16) zum Befestigen des Zugbalkens an dem Rad und zum Ausüben einer Zugkraft auf das Rad, wenn die Drehkraft auf das Paar Gewindeelemente aufgebracht wird.

2. Werkzeug (1) nach Anspruch 1, wobei eine Unterseite des Basiselements (7, 7') dazu angeordnet ist, an der Radnabe zu anzuliegen, um gegen die Radnabe zu drücken, wenn die Drehkraft auf das Paar Gewindeelemente aufgebracht wird.

3. Werkzeug (1) nach Anspruch 2, wobei der mindestens eine Aufnahmeabschnitt (10, 13) an mindestens einem Flanschabschnitt des Basiselements angeordnet ist, wobei der Flanschabschnitt von einer Seitenfläche des Basiselements hervorsteht.

4. Werkzeug (1) nach Anspruch 1, wobei eine Unterseite des Basiselements (7, 7') dazu angeordnet ist, an einer Vielzahl von Radbolzen der Radnabe anzuliegen, um gegen die Radnabe zu drücken, wenn die Drehkraft auf das Paar Gewindeelemente (8) aufgebracht wird.

5. Werkzeug (1) nach Anspruch 4, wobei der mindestens eine Aufnahmeabschnitt (33) in einem zylindrischen Körper an der Unterseite des Basiselements angeordnet ist.

6. Werkzeug (1) nach einem der Ansprüche 1-5, wobei jegliche Öffnungen (4a, 4b, 5a, 5b) des ersten und zweiten Paars Öffnungen in dem Zugbalken längliche Öffnungen sind, die eine Haupterstreckung in einer Richtung, die parallel zu der ersten Achse (101) verläuft, aufweisen.

7. Werkzeug (1) nach einem der Ansprüche 1-6, wobei jedes der mindestens zwei Verbindungselemente (16) eine Kette umfasst, wobei jede Kette an beiden Enden davon mit einem Befestigungselement (17) versehen ist; und
wobei jede Kette dazu angeordnet ist, sie sich über die obere Fläche des Zugbalkens (2) zu erstrecken, und die Befestigungselemente dazu angeordnet sind, einen Satz Hohlräume des Rades in Eingriff zu nehmen, um die Ketten an dem Rad zu befestigen und eine Zugkraft auf das Rad auszuüben, wenn die Rotationskraft auf das Paar Gewindeelemente (8) aufgebracht wird.

8. Werkzeug (1) nach Anspruch 7, wobei der Zugbalken (2) ein Paar Halteelemente (12, 12') aufweist, die auf der oberen Fläche des Zugbalkens angeordnet sind, wobei jedes Halteelement ein Durchgangsloch umfasst; und
wobei jede Kette (16) dazu angeordnet ist, sich durch ein entsprechendes Durchgangsloch des Paars Halteelemente zu erstrecken.

9. Werkzeug (1) nach einem der Ansprüche 1-8, das ferner zwei Paare von Blöcken (11) umfasst, die innerhalb des Zugbalkens angeordnet sind, wobei jeder Block ein Loch (15) zum Aufnehmen eines vorstehenden Abschnitts (14) der Schwenkelemente aufweist.

## Revendications

1. Outil (1) de retrait d'une roue d'un moyeu de roue, l'outil comprenant :
une poutre de traction (2) ayant une forme allongée s'étendant dans une direction parallèle à un premier axe (101), dans lequel la poutre de traction est une poutre creuse ayant une surface supérieure et une surface inférieure ;
dans lequel la poutre de traction a une première paire d'ouvertures et une seconde paire d'ouvertures, chaque paire d'ouvertures ayant une première ouverture (4a, 4b) agencée sur la surface supérieure et une seconde ouverture agencée sur la surface inférieure (5a, 5b), chaque paire d'ouvertures étant alignée pour former une paire de passages (3a, 3b) à travers le faisceau, les passages s'étendant dans une direction parallèle à un deuxième axe (102) qui est perpendiculaire au premier axe ;
une paire d'éléments pivotants (6) agencés à l'intérieur de la poutre de traction, chaque élément pivotant étant agencé entre une paire correspondante d'ouvertures, dans lequel chaque élément pivotant peut pivoter autour d'un axe parallèle à un troisième axe (103) qui est orthogonal au premier axe et au deuxième axe, dans lequel chaque élément pivotant a un trou traversant fileté (9) ;
un élément de base (7, 7') ayant au moins une partie de réception (10, 13, 33) pour recevoir un goujon de roue du moyeu de roue ;
une paire d'éléments filetés (8), chaque élément fileté étant agencé pour s'étendre à travers un passage correspondant de la poutre de traction (2) et à travers le trou traversant fileté (9) d'un élément pivotant correspondant (6), dans lequel chaque élément fileté a une extrémité proximale dépassant de la surface supérieure de la poutre de traction et une extrémité distale dépassant de la surface inférieure de la poutre de traction ;
dans lequel les extrémités distales de la paire d'éléments filetés (8) sont agencées pour venir en butée contre l'élément de base (7, 7') afin d'éloigner la poutre de traction de l'élément de base lorsqu'une force de rotation est appliquée à la paire d'éléments filetés ;
au moins deux éléments de connexion (16) pour fixer la poutre de traction à la roue et exercer une force de traction sur la roue lorsque la force de rotation est appliquée à la paire d'éléments filetés.

2. Outil (1) selon la revendication 1, dans lequel une face inférieure de l'élément de base (7, 7') est agencée pour venir en butée contre le moyeu de roue afin de pousser contre le moyeu de roue lorsque la force de rotation est appliquée à la paire d'éléments filetés.

3. Outil (1) selon la revendication 2, dans lequel l'au moins une partie de réception (10, 13) est agencée sur au moins une partie de rebord de l'élément de base, la partie de rebord dépassant d'une surface latérale de l'élément de base.

4. Outil (1) selon la revendication 1, dans lequel une face inférieure de l'élément de base (7, 7') est agencée pour venir en butée contre une pluralité de goujons de roue du moyeu de roue afin de pousser contre le moyeu de roue lorsque la force de rotation est appliquée sur la paire d'éléments filetés (8).

5. Outil (1) selon la revendication 4, dans lequel l'au moins une partie de réception (33) est agencée dans un corps cylindrique sur la face inférieure de l'élément de base.

6. Outil (1) selon l'une quelconque des revendications 1 à 5, dans lequel chaque ouverture (4a, 4b, 5a, 5b) des première et seconde paires d'ouvertures dans la poutre de traction sont des ouvertures allongées ayant une extension principale dans un direction parallèle au premier axe (101).

7. Outil (1) selon l'une quelconque des revendications 1 à 6, dans lequel chacun de l'au moins deux éléments de connexion (16) comprend une chaîne, chaque chaîne étant pourvue d'un élément de fixation (17) aux deux extrémités de celle-ci ; et
dans lequel chaque chaîne est agencée pour s'étendre sur la surface supérieure de la poutre de traction (2) et les éléments de fixation sont agencés pour être en prise avec un ensemble de cavités de la roue afin de fixer les chaînes à la roue et d'exercer une force de traction sur la roue lorsque la force de rotation est appliquée à la paire d'éléments filetés (8).

8. Outil (1) selon la revendication 7, dans lequel la poutre de traction (2) a une paire d'éléments de maintien (12, 12') agencés sur la surface supérieure de la poutre de traction, chaque élément de maintien comprenant un trou traversant ; et dans lequel chaque chaîne (16) est agencée pour s'étendre à travers un trou traversant correspondant de la paire d'éléments de maintien.

9. Outil (1) selon l'une quelconque des revendications 1 à 8, comprenant également deux paires de briques (11) agencées à l'intérieur de la poutre de traction, chaque brique ayant un trou (15) pour recevoir une partie saillante (14) des éléments pivotants.
